# EUROPEAN PATENT APPLICATION

(11) **EP 2 728 772 A1**
(43) Date of publication of application: **07.05.2014**
(21) Application number: 12190637.4
(22) Date of filing: 30.10.2012
(51) Int. Cl.: H04B 10/114

(54) **Method and apparatus for connecting to a wireless local area network**

(71) Applicant: MAR International ApS, 1711 Copenhagen (DK)
(72) Inventor: Lundgren, Jan, 235 37 VELLINGE (SE); Ericsson, Ola, 244 93 KÄVLINGE (SE)
(74) Representative: Persson, Albin

(57) **Abstract**

A method for connecting a first device (10) to a wireless local area network by transferring any required network related data by encoding said network data as light signals and by emitting said light signals from a second device (12). The method also includes receiving said light signals in a light sensitive means (20) of said first device, decoding said light signals to retrieve said network related data, and transmitting said network related data from said first device (10) for connecting to the wireless local area network.

The first device (10) also comprises a decoder (21) decoding perceived light signals to extract said network related data, and a network interface controller (26) operatively connected to said decoder (21) and arranged to connect to a wireless local area network by transmitting said network related data. The second device (12) comprises a memory (13) storing network related data required for connection to said wireless local area network, an encoder (34) encoding said network related data into light signals and light emitting means (14) emitting said light signals to said light sensitive means.

## Description

### TECHNICAL FIELD

More and more devices are connected to Internet through a wireless local area network (WLAN) also referred to as Wi-Fi. Such a device is connected to the wireless local area network via a network interface controller. Normally, several devices are connected in a wireless local area network to access the Internet. Different security measures and systems are used to limit the access to the wireless local area network and to prevent unauthorized users from accessing it.

A wireless local area network comprises at least one wireless access point covering a smaller or larger area. A wireless local area network is identified by a name referred to as a service set identification (SSID). A wireless access point acts as a master to control all devices or stations within a basic service set (BSS). A station may only join a BSS after explicitly specifying the SSID. There are also different network security standards such as Wired Equivalent Privacy (WEP) and the more sophisticated Wi-Fi Protected Access (WPA). These standards require that a secret, password or a passphrase is used when a station or client joins the network. All clients share the same password. A station or a client normally is a computer or a computer like apparatus such as a cellular telephone or a smartphone.

### PRIOR ART

Also other types of devices are more frequently connected to a wireless local area network and the Internet. Such devices include data collecting devices, temperature sensors and remote control devices but also a plurality of other types of devices. These types of devices normally do not include a display and a keyboard for entering required network data, including at least an SSID and a password or a passphrase.

A standard procedure in these cases is to attach a cable, typically a USB cable, to the device and to connect it to a computer such as a PC (Personal Computer) from which the network data is entered and transferred to the device. Thereafter the cable can be removed. The device then is able to connect to the Wi-Fi and the system is up and running. If the device in the future is to be connected to another Wi-Fi network the procedure with the cable and PC needs to be repeated.

Another approach of manufacturers of Wi-Fi circuits and Wi-Fi routers is to make the procedure possible without having to use a cable connection. It can be done by entering different modes on a Wi-Fi setup and first initiating a point-to-point Wi-Fi-connection (AdHoc) between e.g. a smartphone and the device where the network data can be entered on the smartphone and then be transferred to the device via this AdHoc connection. The device then connects to the network using the received data.

The use of a computer and a cable is technical approach that many users might find too troublesome. Different platforms and different versions of platforms will necessitate substantial software development resources. The indicated use of a smartphone is complicated and security aspects will limit the possibilities to run an application on the smartphone. It will be necessary to change Wi-Fi settings in several steps which may cause problems to most users. Furthermore, the device will require more complicated and specifically adapted Wi-Fi chips and software.

### SUMMARY OF THE INVENTION

An object of the invention is to facilitate the connection of a first device to a wireless local area network such as a Wi-Fi using a second device such as a conventional smartphone, tablet or similar device as a setting device. Any required network data is initially stored in the second device. The required network data can be manually entered by a user through an application or may have been transferred to the second device in a previous step.

The first device can be any type of electronic unit, such as a data collecting device, a temperature sensor, a power plug, a weighing-machine or various types of remote control devices, or any other similar device. In various embodiments of the invention a built-in light source, such as a LED, lamp or similar means, is used to output required data and information in a connecting message from the second device to the first device. The first device comprises a light sensitive means and then uses the received information to join the wireless local area network. The built-in light source normally can be intended to be used as a flashlight or a torch.

In various embodiments the light sensitive means and further control circuits of the first device are active in a receiving mode to receive messages. Such messages can start with a setting command and are transferred as light signals from the second device. After receiving the setting command, the required network data, normally comprising at least an SSID and a password or a passphrase, and optionally additional data, the first device can take the required steps to join the wireless local area network associated to the received data.

In various embodiments the second device automatically outputs the message in a plurality of transmission sessions to ensure that the full message can be received. After receiving the full message the first device outputs an acknowledge signal or feedback signal. The signal output can be a sound signal, such as a beep, a light signal or an indication of a symbol on a display, should a display be available.

Being in the receiving mode the first device does not need to be activated by a user for instance by pressing a button or similar activity. A user intending to connect the first device to a wireless local area network only needs to enable the second device to start the transmission of the connecting message. The second device may need to be positioned in relation to the first device, so as to facilitate the transmission of light signals between the devices. The connecting message can include a checksum or similar information section added by the second device to detect accidental errors that may have been introduced during the transmission. The checksum is used by the first device to evaluate the received connecting message and to ensure that the message does not include errors.

Different embodiments of the second device can have different processing power, different properties of the light source and the speed and timing control can be different, also in different situations. An improved function therefore can be achieved by including a synchronisation and timing process allowing the first device to measure and adapt to the current conditions of the second device. In various embodiments such a synchronisation and timing process is performed during each transmission session.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic perspective view in accordance with the invention,
- Fig. 2: is schematic diagram showing basic functional blocks of a first device and a second device arranged in accordance with one embodiment of the invention, and
- Fig. 3: shows a timing sequence that is used in a transmission session between a first device and a second device in accordance with one embodiment of the invention.

### DETAILED DESCRIPTION

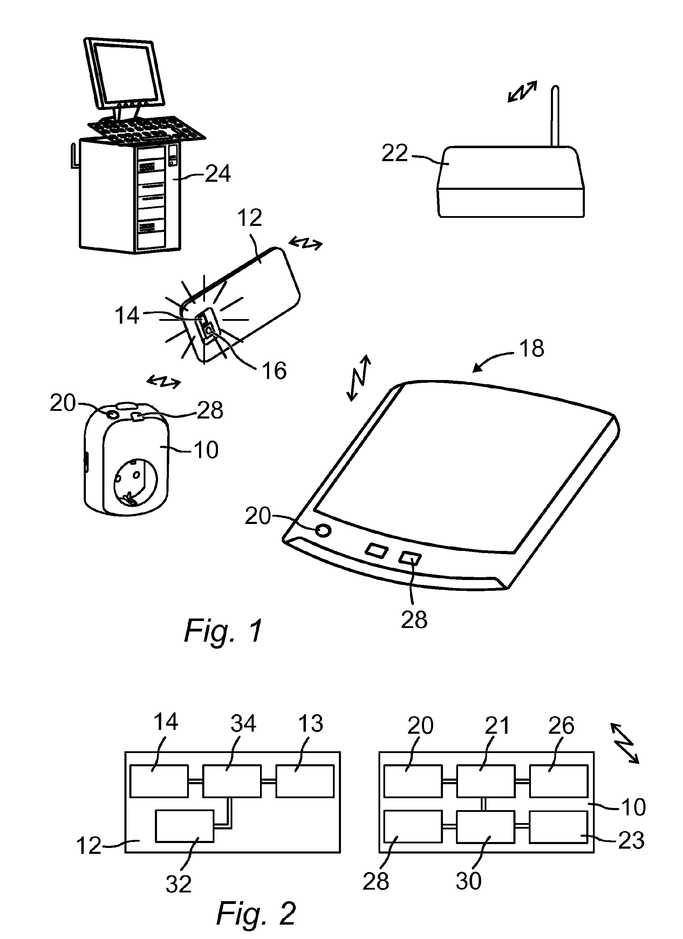

In the embodiment shown in Fig. 1 a first device 10 is constituted by a power plug. A second device 12 is shown as a smartphone having a light source such as a light emitting diode 14 on a backside and a conventional display (not shown) at a front side. The light emitting diode is arranged side by side to a lens 16 forming a part of a camera device. Another example of the first device also shown in Fig. 1 is a weighing-machine as depicted by 18.

The first device 10, 18 is provided with a light sensitive means 20 such as a photo detector that is sensitive to the light emitted by the light source of the first device. The light sensitive means 20 is arranged at a section of the first device which is visible as shown in Fig. 1. In various embodiments the light sensitive means 20 is enabled at all times, so as to capable of receiving light signals transmitted from the light source 14 of the second device 12. In such embodiments a user does not have to press any buttons or make any procedures on the first device to get it programmed with any required network related data.

In various embodiments the light source can be a device such as an incandescent lamp, a light-emitting diode (semiconductor, organic or polymer) or a similar device. The light sensitive means can be a phototransistor, a photoresistor, a photodiode or any similar device. Any operative combination of light source and light sensitive means can be used in accordance with the invention.

The first device 10 is intended to join a wireless local area network indicated by a network access point 22 in Fig. 1. In the shown embodiment the power plug is connected in a conventional manner to a power outlet (not shown). Electronic circuits of the first device 10, c.f. Fig. 2, comprise a light sensitive means 20, a decoder 21, memory means 23 and a network interface controller, such as a wireless adapter 26. Also other embodiments of the first device, such as the weighing-machine 18, include a similar or identical light sensitive means 20. The first device 10 also includes an antenna (not shown). After being connected to the wireless local area network communication can be established between the first device 10 and other clients, such as a smartphone 12 or a conventional computer device 24 through the wireless local area network and through a network access point 22. Internet access can also be available.

The procedure for connecting the first device 10 to the wireless local area network will now be described with reference to Fig. 1 and Fig. 2. The second device 12 comprises a memory 13 in which the network data required to connect to the wireless local area network is stored. The required network data can be manually entered by a user or be transferred from another device such as the computer 24. The user activates a transfer procedure in the second device, for instance by starting an application in a smartphone. In various embodiments the transfer procedure includes also the step of entering the required network data into the second device.

The transfer procedure includes activation of the light emitting means 14 of the second device and encoding said required network data into light signals. Preferably, the second device 12 is placed in the vicinity of the first device 10 or at least in a position where the user is able to have a visual contact with the first device 10 as well as the second device 12. In embodiments in accordance with the invention comprising a smartphone or similar device the application run in the smartphone can include a "photographing" step. This application indicates to the user to direct the smartphone towards the first device as if a photograph is to be taken. As a result the first device 10 will be exposed to light emitted from the light emitting means 14 of the second device 12.

In various embodiment the second device 12 initially will transmit a programming instruction which when received by the first device 10 will start a receiving step. It should be noted that the first device 10 continuously can be in a receiving mode and being capable of receiving messages encoded as light signals from the light emitting means of the second device 12. No manual step or activation of the first device 10 normally is required. The second device comprises a processor 32 running an application or software adapted for the connecting procedure and an encoder 34 operatively connected to the light emitting means 14. Certain or all functions of the encoder 34 can be implemented by the software running in the processor 32.

After transmitting the programming instruction the second device 12 will transmit the required network data, normally comprising SSID, password or passphrase and optional additional data all encoded as light signals. In various embodiments such further data may include an encryption key, additional device properties and other set up information followed by a checksum that ends the transmission and secures that the first device 10 can evaluate the incoming data to be correct. Normally, no acknowledge signal is sent because at this stage there is no radio communication path open between the second device 12 and the first device 10. In various embodiments the first device 10 is provided with output means 28, such as a loudspeaker or a light emitting device (LED), that is used to output a feedback or acknowledge signal to the user that the programming instruction has been properly received.

After receiving the SSID and the password or passphrase and optionally storing received information in the memory means 23 the first device 10 connects to the wireless local area network or Wi-Fi using a wireless adapter 26. In various embodiments means and modules of the first device 10 is controlled by a control unit 30, normally running a control program. When the first device is connected to the Wi-Fi it can be accessed by other devices, including the second device 12, through the internet in accordance with normal routines.

The light sensitive means 20 of the first device continuously produces a signal based on incident light including ambient light. The signal can be used to set thresholds in accordance with current conditions, so as to improve sensibility to light signals from the second device 12.

A communication link based on light signals presented above and operated at shorter distances such as 5-25 cm is very safe. At such distances it would be very difficult for external parties to intercept messages and acquire secure private information. The proximity of the first device and the second device also will facilitate the connection of each separate device because the user in most applications will have only one device in sight at the time.

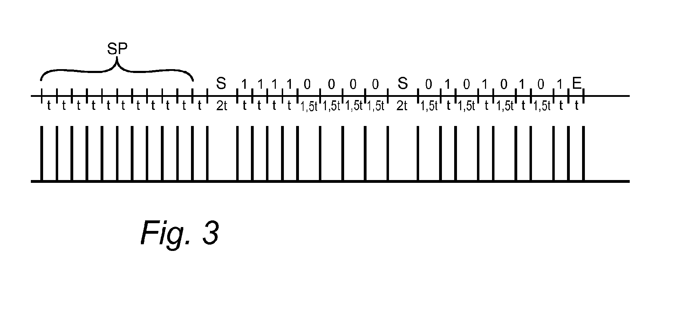

An embodiment of a suitable message format used for transferring messages from the second device to the first device is shown in the diagram Fig. 3. An upper part shows a timing sequence and a lower part shows light signal pulses. A message starts with a plurality of pulses with a constant pulse interval t measured as the time period between rising edges of two consecutive light pulses. In the embodiment shown in Fig. 3 ten consecutive pulses are transmitted as a synchronisation and preamble sequence SP. When such a pulse sequence is detected by the first device 10 a basic setting of baud rate and threshold values of signal strength in relation to ambient light can be made. In this way the detecting of further pulses is improved.

The synchronisation and preamble sequence SP is followed by a start bit S indicating the start of a message. In the embodiment shown the start bit is coded as a 2t long interval between two consecutive pulses. Then follows an eight data bit word where a "1" is coded as a 1t t long interval between two consecutive pulses and where a "0" is coded as a 1,5t interval as shown in the lower part of Fig. 3. The first word is "11110000". A message formed by an arbitrary number of eight bit words then follows (not shown). After a new start bit S of 2t length a last eight data bit word follows, in this case "01010101" followed by a stop bit E indicating end of message. Preferably, the message sent from the second device 12 is repeated at least twice, so as to ensure that a complete message can be obtained and decoded by the first device 10.

When a complete programming instruction message is received and decoded by the first device 10 the control unit 30 will compare the set up data of the received message with set up data already stored in the memory means 23. If the set up data is identical no change is made. The first device still acknowledges the received set up message by the output of a light or sound signal from the output means 28.

As shown in Fig. 3 a complete message comprises a synchronisation and preamble sequence SP, a start bit S, a word of data, further sets of a start bit S and a word of data. A stop bit E ends a full message. The format of the message does not set any limits to the length of the message or to the number of words or bytes included therein. An improvement of message transfer is achieved by adding a checksum for instance in a CRC16 format as the two last data words. The checksum is calculated on the basis of all data included in the message.

A programming sequence using a smartphone as a second device 12 can include the following steps:
1) Start Wi-Fi setup application in smartphone,
2) Select a Wi-Fi network from a list of available networks, as a previously used network or by entering an SSID of the wireless local area network,
3) Use the associated password or enter a password manually,
4) Enter or use optional data related to the first device, to the network or to the smartphone,
5) Start transmission of a message, as to be repeated until interrupted by the user or by a time-out,
6) Improve transmission speed by holding the smartphone close to and directed towards the first device,
7) Await output of an acknowledge signal from the first device, and
8) Abort transmission of programming sequence after receiving the acknowledge signal,
9) Proceed with further communication with the second device through an established Wi-Fi and internet connection.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A method for connecting a first device (10) to a wireless local area network by transferring any required network related data, ***characterised* by** encoding said network data as light signals,
emitting said light signals from a second device (12),
receiving said light signals in a light sensitive means (20) of said first device (10),
decoding said light signals to retrieve said network related data, and
transmitting said network related data as radio signals from said first device (10) for connecting to the wireless local area network.

2. A method as claimed in claim 1, wherein said encoding comprises: forming an information bit as part of a word of said network data by switching on a light emitting means (14) of said second device, switching off said light emitting means (14) and again switching on said light emitting means (14) to produce two light pulses, a time period in between said pulses being indicative of the information bit.

3. A method as claimed in claim 1 or claim 2, further comprising outputting an acknowledge signal from said first device (10) when a complete message comprising said network related data has been received.

4. A method as claimed in 3, further comprising repeatedly transmitting said network related data from said second device (12) until said acknowledge signal is detected.

5. A method as claimed in any one of claim 1-5, further comprising initially emitting light signals forming a synchronisation and preamble sequence (SP).

6. A method as claimed in claim 5, wherein said synchronisation and preamble sequence (SP) comprises a plurality of consecutive light pulses transmitted with equal time gaps between the pulses.

7. A system facilitating connection to a wireless local area network ***characterised by***
a) a first device (10) comprising:
* light sensitive means (20) sensitive to light signals,
* a decoder (21) decoding perceived light signals to extract said network related data, and
* a network interface controller (26) operatively connected to said decoder (21) and arranged to connect to a wireless local area network by transmitting said network related data,
b) a second device (12) comprising:
* a memory (13) storing network related data required for connection to said wireless local area network,
* an encoder (34) encoding said network related data into light signals and
* light emitting means (14) emitting said light signals.

8. A system as claimed in claim 7, wherein said second device (12) is a mobile telephone or a tablet.

9. A system as claimed in claim 7 or 8, wherein said first device (10) comprises a control unit (30) operatively connected to said decoder (21) and to an output means (28) for producing an output signal when the network related data has been decoded.

10. A system as claimed in any one of claim 7-9, wherein said light sensitive means (20) of the first device is arranged to measure ambient light conditions.

## Amended claims

### Amended claims in accordance with Rule 137(2) EPC.

**1.** A method for connecting a first device (10) to a wireless local area network through a network access point (22) by transferring any required network related data, ***characterised* by**
encoding said network data as light signals,
emitting said light signals from a second device (12),
receiving said light signals in a light sensitive means (20) of said first device (10),
decoding said light signals to retrieve said network related data,
outputting a feedback signal after receiving a full message starting with a setting command and including said network related data, and
transmitting said network related data as radio signals from a network interface controller (26) of said first device (10) for connecting to the wire-less local area network.

**2.** A method as claimed in claim 1, wherein said encoding comprises: forming an information bit as part of a word of said network data by switching on a light emitting means (14) of said second device, switching off said light emitting means (14) and again switching on said light emitting means (14) to produce two light pulses, a time period in between said pulses being indicative of the information bit.

**3.** A method as claimed in claim 1 or claim 2, further comprising outputting an acknowledge signal from said first device (10) when a complete message comprising said network related data has been received.

**4.** A method as claimed in 3, further comprising repeatedly transmitting said network related data from said second device (12) until said acknowledge signal is detected.

**5.** A method as claimed in any one of claim 1-5, further comprising initially emitting light signals forming a synchronisation and preamble sequence (SP).

**6.** A method as claimed in claim 5, wherein said synchronisation and preamble sequence (SP) comprises a plurality of consecutive light pulses transmitted with equal time gaps between the pulses.

**7.** A system facilitating connection to a wireless local area network ***characterised* by**
a) a first device (10) comprising:
* light sensitive means (20) sensitive to light signals,
* a decoder (21) decoding perceived light signals to extract network related data,
* a network interface controller (26) operatively connected to said decoder (21) and arranged to connect to a wireless local area network by transmitting said network related data to a network access point (22), and
* output means (28) outputting a feedback signal after receiving a full message starting with a setting command and including said network related data,
b) a second device (12) comprising:
* a memory (13) storing network related data required for connection to said wireless local area network,
* an encoder (34) encoding said network related data into light signals and
* light emitting means (14) emitting said light signals.

**8.** A system as claimed in claim 7, wherein said second device (12) is a mobile telephone or a tablet.

**9.** A system as claimed in claim 7 or 8, wherein said first device (10) comprises a control unit (30) operatively connected to said decoder (21) and to an output means (28) for producing an output signal when the network related data has been decoded.

**10.** A system as claimed in any one of claim 7-9, wherein said light sensitive means (20) of the first device is arranged to measure ambient light conditions.
